(19) **Europäisches Patentamt / European Patent Office / Office européen des brevets**

(11) **EP 3 521 656 A1**

(12) # EUROPEAN PATENT APPLICATION
published in accordance with Art. 153(4) EPC

(43) Date of publication:
**07.08.2019 Bulletin 2019/32**

(51) Int Cl.:
*F16F 15/023* (2006.01)   *F16F 3/07* (2006.01)
*F16F 15/04* (2006.01)

(21) Application number: **17855617.1**

(22) Date of filing: **05.09.2017**

(86) International application number:
**PCT/JP2017/031976**

(87) International publication number:
**WO 2018/061659 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2016   JP 2016193329**

(71) Applicant: **Mitsubishi Electric Corporation Chiyoda-ku Tokyo 100-8310 (JP)**

(72) Inventor: **YAMAZAKI, Tamon Tokyo 100-8310 (JP)**

(74) Representative: **Sajda, Wolf E. Meissner Bolte Patentanwälte Rechtsanwälte Partnerschaft mbB Postfach 86 06 24 81633 München (DE)**

(54) **VIBRATION ISOLATION DEVICE**

(57)  In a vibration isolation device (10), for a combined volume compliance $C_V$ of a first volume chamber (17) and a second volume chamber (18), an effective cross sectional area $A_e$ of the first volume chamber (17) and the second volume chamber (18), a pressure receiving area $A_P$ of a first end flange (21) and a second end flange (22), an effective fluid inertia L of a damping medium (23) in an orifice, a stiffness ks of an elastic element (2), and an upper limit frequency $\omega_r$ of application of vibration isolation, one of the combined volume compliance $C_V$ and the stiffness ks has a negative value, the other thereof has a positive value, and the combined volume compliance $C_V$ and the stiffness $k_S$ satisfy a predetermined relationship.

## FIG. 3

EP 3 521 656 A1

**Description**

<u>Technical Field</u>

The present invention relates to a vibration isolation device configured to suppress vibration transmission between a supporting body and a supported body.

<u>Background Art</u>

When a precision device having risks such as performance degradation and a damage caused by external vibration and impact is operated or installed, a vibration isolation device may be applied in order to protect the precision device from those external inputs.

The vibration isolation device is a device generally formed of materials and components having viscoelasticity. The vibration isolation device is inserted in a load transmission path between the external input source and the precision device, to thereby provide a function of reducing the load applied to the precision device, namely, a vibration isolation function.

As a general vibration isolation device, a two-element-type vibration isolation device is known. The two-element-type vibration isolation device is formed by coupling an elastic element and a damping element to each other in parallel, and is configured to use those elements to support the precision device with respect to a base surface.

In the two-element-type vibration isolation device, it is known that a vibration isolation function of achieving a gain of a response displacement of the precision device less than one appears in response to a forced displacement of the base surface in a high frequency band, resulting in a roll-off after a cutoff frequency of -20 dB/dec. "-20 dB/dec" indicates that a roll-off per decade is -20 dB.

In such a vibration isolation device, a vibration isolation characteristic, which is a performance evaluation index of the vibration isolation device, is to be increased generally by setting stiffness of the elastic element to be low. This is because a vibration transmissibility can be reduced at a specific frequency by reducing the frequency of a resonance and the cutoff frequency.

However, in general, high support stiffness of the precision device is often advantageous in practice in consideration of space stability and setting of the precision device and strength of the vibration isolation device. Therefore, a lower limit exists in the stiffness in practice, and, due to this lower limit, there has been such a problem that the vibration isolation characteristic cannot be increased beyond a certain value.

Thus, in order to solve this problem, a three-element-type vibration isolation device is proposed. The three-element-type vibration isolation device is formed by inserting a second-order elastic element in series to the damping element of the two-element-type vibration isolation device. It is known that, in the three-element-type vibration isolation device, the roll-off after the cutoff frequency is -40 dB/dec, and thus an excellent vibration isolation effect is presented compared with the two-element-type vibration isolation device.

As a result, the vibration transmissibility can be reduced while the support stiffness is maintained. Moreover, as another point of view, the support stiffness of the precision device can be increased while the vibration transmissibility can be maintained at a certain frequency. Therefore, a vibration isolation device high in stiffness and isolation effect can be achieved.

As described above, in practice, it is preferred that the vibration isolation device be high in stiffness and isolation effect. To achieve such characteristics, it is desired that a slope of a high-frequency roll-off be steep. Thus, in addition to the three-element-type vibration isolation device, various vibration isolation devices of a passive type are proposed (for example, see Patent Literature 1 and Patent Literature 2).

Specifically, a vibration isolation device described in Patent Literature 1 provides a damping effect by coupling two chambers through an orifice, and causing an internally sealed viscous fluid to flow. This vibration isolation device is represented as a physical model formed by adding an effective fluid mass between the damping element and the second-order elastic element in the above-mentioned three-element-type vibration isolation device.

In this vibration isolation device, the effective fluid mass can be adjusted through a ratio between a chamber cross sectional area and an orifice cross sectional area. Moreover, in this vibration isolation device, a roll-off of - 60 dB/dec even in a worst case is achieved by adjusting the ratio between the cross sectional areas so as to increase the damping and isolation performance.

Moreover, a vibration isolation device described in Patent Literature 2 is formed by dynamically coupling vibration isolation mechanisms formed of bellows in series to each other on two stages. In this vibration isolation device, a roll-off of -80 dB/dec is achieved while dimensions are maintained by concentrically arranging the two bellows.

List of Citations

Patent Literature

[PTL 1] JP 2007-531852 A
[PTL 2] JP 2009-174604 A

Summary of the Invention

Technical Problem

However, in the vibration isolation device described in Patent Literature 1, there is a description that -60 dB/dec even in a worst case can be achieved by adjusting the ratio between the cross sectional areas so as to increase the damping and isolation performance, but a specific adjustment method is not disclosed, and thus there is such a problem as a lack in theoretical basis for achieving the roll-off of -60 dB/dec.

Moreover, in the vibration isolation device described in Patent Literature 2, at least two vibration isolation mechanisms are required, and thus there is such a problem that an internal structure becomes complex. Further, due to a finite intermediate mass existing in a connection portion between the vibration isolation mechanisms on the two stages, second-order resonance appears in the vibration transmission characteristic, which is the performance evaluation index of the vibration isolation device, and thus there is such a problem that the vibration isolation effect deteriorates.

The present invention has been made in view of the above-mentioned problems, and therefore has an object to provide a vibration isolation device having only a single passive element and capable of achieving a roll-off of - 80 dB/dec in a best case while an increase in size and complexity of the device due to added components is avoided.

Solution to Problem

According to one embodiment of the present invention, there is provided a vibration isolation device including an elastic element and a damping element, which are coupled to each other in parallel, wherein the damping element includes: a first volume chamber and a second volume chamber each having a volume compliance; a first end flange connected to an end of the first volume chamber; a second end flange connected to an end of the second volume chamber; an intermediate flange, in which an orifice configured to couple the first volume chamber and the second volume chamber to each other is formed; a damping medium sealed in a closed space formed of the first volume chamber, the second volume chamber, the intermediate flange, the first end flange, and the second end flange; and a coupling pole configured to stiffly couple the first end flange and the second end flange to each other, and wherein, for a combined volume compliance $C_V$ of the first volume chamber and the second volume chamber, an effective cross sectional area $A_e$ of the first volume chamber and the second volume chamber, a pressure receiving area $A_P$ of the first end flange and the second end flange, an effective fluid inertia L of the damping medium in the orifice, a stiffness $k_S$ of the elastic element, and an upper-limit frequency $\omega_r$ of application of vibration isolation, one of the combined volume compliance $C_V$ and the stiffness ks has a negative value, the other thereof has a positive value, and the combined volume compliance $C_V$ and the stiffness $k_S$ satisfy a relationship given by Expression (1).

$$\left| k_S C_V + A_P A_e \right| \leq \left| \frac{k_S}{L\omega_r^2} \right| \qquad \ldots(1)$$

Advantageous Effects of the Invention

With the vibration isolation device according to one embodiment of the present invention, for the combined volume compliance $C_V$ of the first volume chamber and the second volume chamber, the effective cross sectional area $A_e$ of the first volume chamber and the second volume chamber, the pressure receiving area $A_P$ of the first end flange and the second end flange, the effective fluid inertia L of the damping medium in the orifice, the stiffness $k_S$ of the elastic element, and the upper-limit frequency $\omega_r$ of the application of the vibration isolation, one of the combined volume compliance $C_V$ and the stiffness $k_S$ has a negative value, the other thereof has a positive value, and the combined volume compliance $C_V$ and the stiffness $k_S$ satisfy the predetermined relationship.

Therefore, a roll-off of -80 dB/dec in a best case can be achieved with the single passive element while the increase in size and complexity of the device due to added components is avoided.

Brief Description of the Drawings

FIG. 1     is a perspective view for illustrating a vibration isolation device according to a first embodiment of the present invention.

FIG. 2     is a cross sectional view for illustrating the vibration isolation device according to the first embodiment of the present invention.

FIG. 3     is a conceptual diagram for illustrating a simplified internal structure of the vibration isolation device according to the first embodiment of the present invention.

FIG. 4     is a conceptual diagram for illustrating an operation principle of the vibration isolation device according to the first embodiment of the present invention.

FIG. 5     is a diagram for illustrating an equivalent circuit of a fluid damper of the vibration isolation device according to the first embodiment of the present invention.

FIG. 6     is a diagram for illustrating a dynamic model of the vibration isolation device according to the first embodiment of the present invention.

FIG. 7     is a table for showing an example of numerical values of a related-art vibration isolation device and the vibration isolation device according to the present invention.

FIG. 8     is a graph for showing a vibration transmission characteristic exhibited when no damping is assumed in the vibration isolation device according to the first embodiment of the present invention.

FIG. 9     is a graph for showing the vibration transmission characteristic exhibited when damping is considered in the vibration isolation device according to the first embodiment of the present invention.

FIG. 10     is a conceptual diagram for exemplifying a spring for achieving a negative stiffness in the vibration isolation device according to the first embodiment of the present invention.

FIG. 11     is a graph for showing a load-displacement curve of a negative-stiffness spring or a pressure-volume change curve of a negative-volume compliance volume chamber in the vibration isolation device according to the first embodiment of the present invention.

FIG. 12     is a conceptual diagram for exemplifying a cylindrical spring presenting a negative stiffness in the vibration isolation device according to the first embodiment of the present invention.

FIG. 13     is a graph for showing the vibration transmission characteristic exhibited when no damping is assumed in a vibration isolation device according to a second embodiment of the present invention.

FIG. 14     is a graph for showing the vibration transmission characteristic exhibited when damping is considered in the vibration isolation device according to the second embodiment of the present invention.

FIG. 15     is a conceptual diagram for exemplifying a volume chamber for achieving a negative volume compliance in the vibration isolation device according to the second embodiment of the present invention.

FIG. 16     is a conceptual diagram for illustrating a cross section of a bellows volume chamber for achieving the negative volume compliance in the vibration isolation device according to the second embodiment of the present invention.

FIG. 17     is a graph for showing the vibration transmission characteristic exhibited when an expression in parentheses of Expression (3-2) is positive in a vibration isolation device according to a third embodiment of the present invention.

FIG. 18     is a graph for showing the vibration transmission characteristic exhibited when the expression in parentheses of Expression (3-2) is negative in the vibration isolation device according to the third embodiment of the present invention.

FIG. 19     is a graph for showing the vibration transmission characteristic exhibited when the expression in parentheses of Expression (3-2) is positive in a vibration isolation device according to a fourth embodiment of the present invention.

FIG. 20     is a graph for showing the vibration transmission characteristic exhibited when the expression in parentheses of Expression (3-2) is negative in the vibration isolation device according to the fourth embodiment of the present invention.

Description of Embodiments

Description is now made of a vibration isolation device according to preferred embodiments of the present invention referring to the accompanying drawings, and throughout the drawings, like or corresponding components are denoted by like reference symbols to describe those components.

First Embodiment

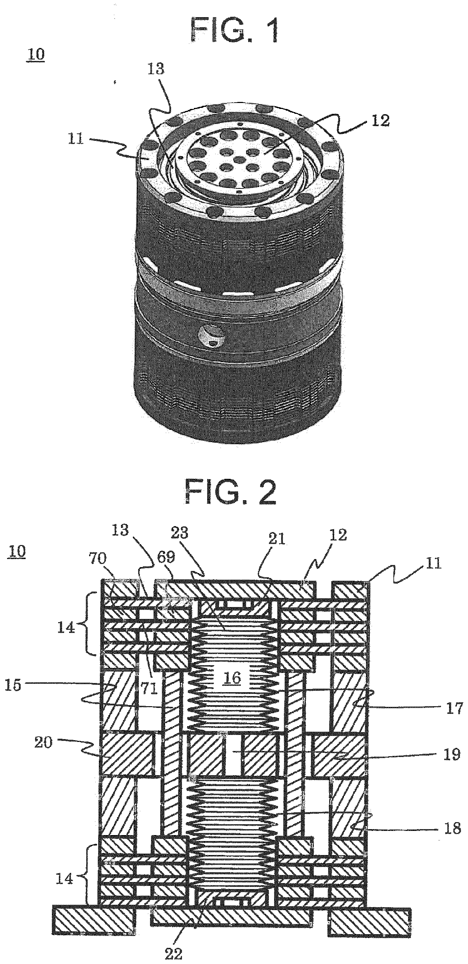

FIG. 1 is a perspective view for illustrating a vibration isolation device according to a first embodiment of the present invention. In FIG. 1, a vibration isolation device 10 has a cylindrical shape. An outer peripheral cylindrical tube 11 and an internal cylinder 12 are elastically connected to each other through a plurality of plate springs 13 each having a circular plate shape. Moreover, the outer peripheral cylindrical tube 11 and the internal cylinder 12 are connected to each other for damping through a fluid damper in addition to the plate springs 13, which is not shown in FIG. 1.

One of the outer peripheral cylindrical tube 11 and the internal cylinder 12 is connected to a vibration source side, and the other thereof is connected to a side the vibration of which is to be suppressed, for example, a precision device. In this state, when a vibration is applied to the outer peripheral cylindrical tube 11 or the internal cylinder 12, vibration in a center axis direction of the outer peripheral cylindrical tube 11 and the internal cylinder 12 is absorbed due to elasticity of the plate springs 13. As a result, the vibration isolation device 10 cuts off transmission of the vibration and a load in this direction.

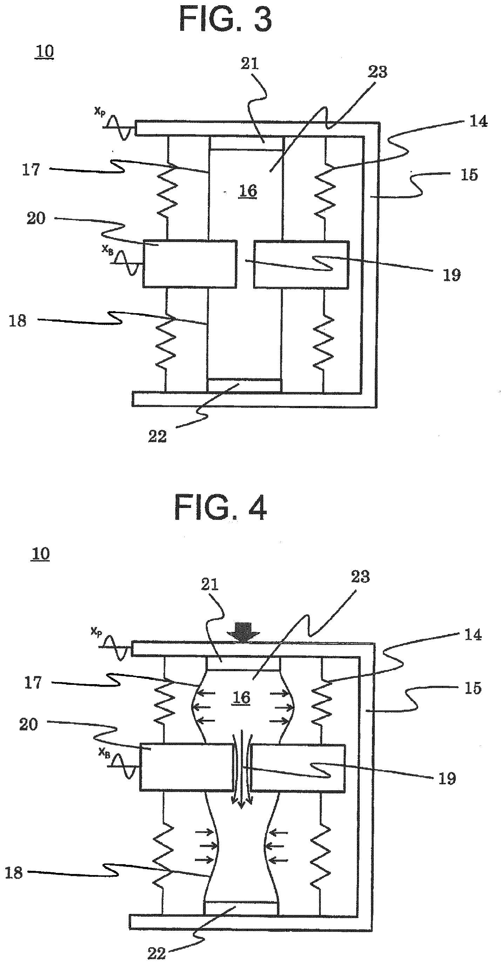

Referring to FIG. 2 to FIG. 4, detailed description is now made of an internal structure and an operation principle of the vibration isolation device 10. FIG. 2 is a cross sectional view for illustrating the vibration isolation device according to the first embodiment of the present invention. In this case, a cross section on a plane containing the center axis of the vibration isolation device 10 is illustrated. FIG. 3 is a conceptual diagram for illustrating a simplified internal structure of the vibration isolation device according to the first embodiment of the present invention. FIG. 4 is a conceptual diagram for illustrating an operation principle of the vibration isolation device according to the first embodiment of the present invention.

In FIG. 2 to FIG. 4, as described above, the vibration isolation device 10 is roughly formed of the outer peripheral cylindrical tube 11 and the internal cylinder 12. The outer peripheral cylindrical tube 11 and the internal cylinder 12 are elastically connected to each other through layered structures 14 of the plate springs 13 each having the circular plate shape, which form the elastic element.

The layered structure 14 is formed of the plurality of plate springs 13. Moreover, an inner peripheral spacer 69 and an outer peripheral spacer 70 are sandwiched between each pair of plate springs 13 neighboring each other. An outer peripheral portion of each of the plate springs 13 forms a part of the outer peripheral cylindrical tube 11, and moves integrally with a motion of the outer peripheral cylindrical tube 11. Further, an inner peripheral portion of each of the plate springs 13 forms a part of the internal cylinder 12, and moves integrally with a motion of the internal cylinder 12.

In the above-mentioned configuration, a center portion of the plate spring 13, which is not sandwiched between the inner peripheral spacers 69 adjacent to each other, and is not sandwiched between the outer peripheral spacers 70 adjacent to each other, serves as a flexure portion 71. The flexure portion 71 presents an elastic restoring force to a relative displacement in the center axis direction between the outer peripheral cylindrical tube 11 and the internal cylinder 12.

Further, in the above-mentioned structure, the flexure elements 71 of the respective plate springs 13 are not in contact with one another, and thus do not generate fiction forces. Therefore, the layered structure 14 of the plate springs 13 presents an excellent liner spring characteristic for the relative displacement between the outer peripheral cylindrical tube 11 and the internal cylinder 12.

In other words, the layered structure 14 presents the elastic restoring force even in a minute displacement region in which generally an elastic deformation is less likely to generate and friction forces are dominant.

In this case, two layered structures 14 of the plate springs 13, each having the circular plate shape, are built into the vibration isolation device 10, and are connected to each other through coupling poles 15, which are ideally stiff. Further, the layered structures 14 are displaced in synchronization with the relative displacement in the center axis direction between the outer peripheral cylindrical tube 11 and the internal cylinder 12.

The relative displacement between the outer peripheral cylindrical tube 11 and the internal cylinder 12 is constrained more to the center axis direction by arranging the layered structures 14 of the plate springs 13 in the center axis direction so as to be offset from each other by a certain distance in this way. As a result, the vibration isolation device 10 presents an ideal vibration isolation effect having suppressed unrequired mechanical resonance.

Moreover, the fluid damper 16, which is a damping element, has flexibility in an up/down direction of the drawing sheet, and includes a first volume chamber 17 and a second volume chamber 18 each having a certain volume compliance. The volume compliance is herein defined as "volume/ bulk modulus" of each of the volume chamber.

Moreover, the fluid damper 16 includes an intermediate flange 20, which connects the first volume chamber 17 and the second volume chamber 18 in series to each other in the up/down direction of the drawing sheet and has an orifice 19 formed therein, a top end flange (first end flange) 21 connected to a top end of the first volume chamber 17, a bottom end flange (second end flange) 22 connected to a bottom end of the second volume chamber 18, and a damping fluid (damping medium) 23 filled in a closed space formed of the first volume chamber 17, the second volume chamber 18, the intermediate flange 20, the top end flange 21, and the bottom end flange 22.

The fluid damper 16 is configured to exchange the damping fluid 23 through the orifice 19 by extensions/contractions of the first volume chamber 17 and the second volume chamber 18 in synchronization with the relative displacement in the center axis direction between the outer peripheral circular tube 11 and the internal cylinder 12 due to the existence of the coupling poles 15, which are ideally stiff, as in the layered structures 14 of the plate springs 13.

Moreover, in this case, the first volume chamber 17 and the second volume chamber 18 present behaviors of extension and contraction as schematically illustrated in FIG. 4 in accordance with generated internal pressure variations and the volume compliance of each chamber. The fluid damper 16 finally presents as a damping force a reaction force corresponding to a pressure drop, which is determined by an orifice resistance and a flow rate, to the relative displacement in the center axis direction.

Incidentally, the fluid damper 16 does not include slide portions in the case of the above-mentioned configuration, and a friction force is not thus generated.

In other words, the fluid damper 16 in the present invention can provide a stable damping force in the minute displacement region. Meanwhile, a regular fluid damper of a piston/cylinder system does not present an effective displacement generated with respect to the device in the minute displacement region, and thus cannot provide a damping force. In contrast, the fluid damper 16 in the present invention is effective for providing a stable damping force in the minute displacement region.

The vibration isolation device 10 is constructed mainly of: a dynamic parallel connection between the layered structures 14 of the plate springs 13 serving as the elastic element; and the fluid damper 16 formed of the first volume chamber 17 and the second volume chamber 18 and serving as the damping element. A sum of characteristics of the respective elements is a dynamic characteristic of the vibration isolation device 10.

In particular, the vibration isolation device 10 presents a stable vibration isolation effect regardless of the magnitude of the relative displacement by employing the layered structures 14 without friction and the fluid damper 16 without friction. In addition, a behavior of the vibration isolation effect can precisely be reproduced through a mathematical model described later, and can thus be predicted.

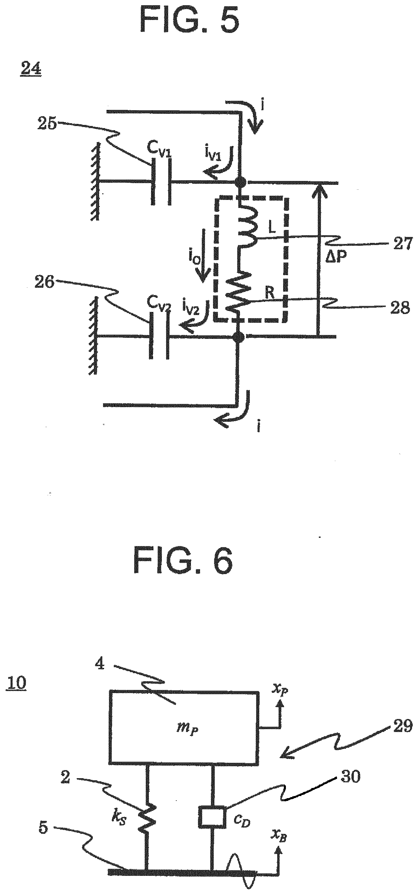

Referring to FIG. 5, description is now made of derivation of the mathematical model in order to clarify a vibration isolation characteristic of the vibration isolation device 10 configured as described above. FIG. 5 is a diagram for illustrating an equivalent circuit of the fluid damper of the vibration isolation device according to the first embodiment of the present invention. A behavior of a fluid system of the above-mentioned fluid damper 16 is represented as an equivalent circuit 24 of FIG. 5.

In FIG. 5, the equivalent circuit 24 is formed of a volume compliance 25 of the first volume chamber 17, a volume compliance 26 of the second volume chamber 18, an effective fluid inertia 27 of the damping fluid 23 in the orifice 19, and a fluid resistance 28 of the orifice 19.

Regarding respective symbols illustrated in FIG. 5, $C_{V1}$ indicates the volume compliance 25 of the first volume chamber 17, $C_{V2}$ indicates the volume compliance 26 of the second volume chamber 18, L indicates the effective fluid inertia 27 of the damping fluid 23 in the orifice 19, and R indicates the fluid resistance 28 in the orifice 19. A sum of the volume compliance $C_{V1}$ of the first volume chamber 17 and the compliance $C_{V2}$ of the second volume chamber 18 is indicated as a combined volume compliance $C_V$.

Moreover, in FIG. 5, i indicates a forced flow rate of fluid pushed out by the top end flange 21 as a result of the relative displacement of the vibration isolation device 10, $i_{V1}$ indicates a flow rate of fluid flowing into the first volume chamber 17, $i_{V2}$ indicates a flow rate of fluid flowing into the second volume chamber 18, $i_O$ indicates a flow rate of fluid flowing into the orifice 19, and $\Delta_p$ indicates a pressure drop due to the flow of the damping fluid 23 into the orifice 19.

In this case, through solving of the equivalent circuit 24, a relationship between the forced flow rate i and the pressure drop $\Delta_p$ can be formulated into Expression (1-1).

$$\Delta p = \frac{Z_O Z_V}{Z_O + Z_V} i \qquad ...(1\text{-}1)$$

In Expression (1-1), respective symbols are given as follows.

$$Z_V = Z_{V1} + Z_{V2} \qquad ...(1\text{-}2)$$

$$Z_{Vi} = \frac{1}{C_{Vi}s} \qquad ...(1\text{-}3)$$

$$Z_O = R + sL \qquad ...(1\text{-}4)$$

$$R = \frac{8\pi\rho\nu l}{A_O^2} \qquad \ldots(1\text{-}5)$$

$$L = \rho l / A_O \qquad \ldots(1\text{-}6)$$

Moreover, in Expression (1-3) to Expression (1-6), s indicates the Laplace operator, $\rho$ indicates the density of the damping fluid 23, $\nu$ indicates the kinematic viscosity of the damping fluid 23, l indicates the length of the orifice 19, and $A_O$ indicates the cross sectional area of the orifice 19.

An expression of a relationship between a relative speed u of the fluid damper 16 and a reaction force $f_D$ from the fluid system derived from Expression (1-1) is given as follows.

$$f_D = \left( \frac{Z_O Z_V}{Z_O + Z_V} A_P A_e \right) u \qquad \ldots(1\text{-}7)$$

A term in parentheses indicates an equivalent viscous damping coefficient $c_D$ of the fluid damper 16.

In Expression (1-7), $A_e$ indicates an effective cross sectional area of the first volume chamber 17 and the second volume chamber 18, and $A_P$ indicates a pressure reception area that receives an internal pressure of the damping fluid 23 on the top end flange 21 and the bottom end flange 22.

Expression (1-7) is written through use of Expression (1-2) to Expression (1-6) as follows.

$$c_D = A_P A_e \frac{Ls + R}{LC_V s^2 + RC_V s + 1} \qquad \ldots(1\text{-}8)$$

It is understood that the reaction force of the fluid system forms a second-order delay system. The following denotation is used.

$$C_V = C_{V1} + C_{V2} \qquad \ldots(1\text{-}9)$$

The vibration isolation device 10 containing such a fluid system can be expressed by a dynamic model of FIG. 6. FIG. 6 is a diagram for illustrating the dynamic model of the vibration isolation device according to the first embodiment of the present invention. In FIG. 6, the vibration isolation device 10 represented by this dynamic model 29 is configured to couple an elastic element 2 and a damping element 30 to each other in parallel, and to use the coupled elastic element 2 and damping element 30 to support a precision device 4 on a base surface 5.

Moreover, in FIG. 6, mp indicates the mass of the precision device 4, $k_S$ indicates the axial stiffness of the elastic element 2, $c_D$ indicates the equivalent viscous damping coefficient of the damping element 30 given by Expression (1-8), $x_B$ indicates a forced displacement of the base surface 5 as an external input, and $x_P$ indicates a response displacement of the precision device 4. The axial stiffness ks may include the axial stiffness of the first volume chamber 17 and the second volume chamber 18.

Moreover, the vibration isolation characteristic of the vibration isolation device 10 represented as the dynamic model 29 is given as follows.

$$T(s) = \frac{c_D s + k_S}{m_P s^2 + c_D s + k_S} \qquad \ldots(1\text{-}10)$$

Expression (1-10) is written through use of Expression (1-8) as follows.

$$T(s) = \frac{L(k_S C_V + A_P A_e)s^2 + R(k_S C_V + A_P A_e)s + k_S}{m_P C_V L s^4 + m_P C_V R s^3 + (C_V L k_S + m_P + A_P A_e L)s^2 + R(k_S C_V + A_P A_e)s + k_S}$$

$$\ldots(1\text{-}11)$$

As understood from Expression (1-11), in the typical vibration isolation device 10 illustrated in FIG. 1 to FIG. 6, the relative order between the numerator and the denominator with respect to s is the second order. Therefore, the gradient at the roll-off is -40 dB/dec when the vibration isolation device 10 is designed without adjusting the respective parameters. Moreover, it is also understood that two resonances and one antiresonance appear.

In the first embodiment of the present invention, out of vibration isolation devices expressed by the vibration transmission characteristic of Expression (1-11), a vibration isolation device adjusted so as to set the following expression is disclosed.

$$k_S = -\frac{A_P A_e}{C_V} < 0 \qquad\qquad \ldots(1\text{-}12)$$

In this case, $A_P$, $A_e$, and $C_V$ usually take positive values. Therefore, in the first embodiment of the present invention, Expression (1-12) means that ks is selected so as to present a negative stiffness. Moreover, an absolute value of the right side of Expression (1-12) means a sum of the axial stiffness based on the volume compliance $C_{V1}$ of the first volume chamber 17 and the axial stiffness based on the volume compliance $C_{V2}$ of the second volume chamber 18.

Therefore, Expression (1-12) means that the stiffness of the elastic element 2 is adjusted to have a negative value so as to cancel the axial stiffness of the volume chambers based on the volume compliance $C_V$.

When ks is adjusted to take a negative value so as to satisfy Expression (1-12), the vibration transmission characteristic of the vibration isolation device can be rewritten as follows.

$$T(s) = \frac{k_S}{m_P C_V L s^4 + m_P C_V R s^3 + m_P s^2 + k_S} \qquad\qquad \ldots(1\text{-}13).$$

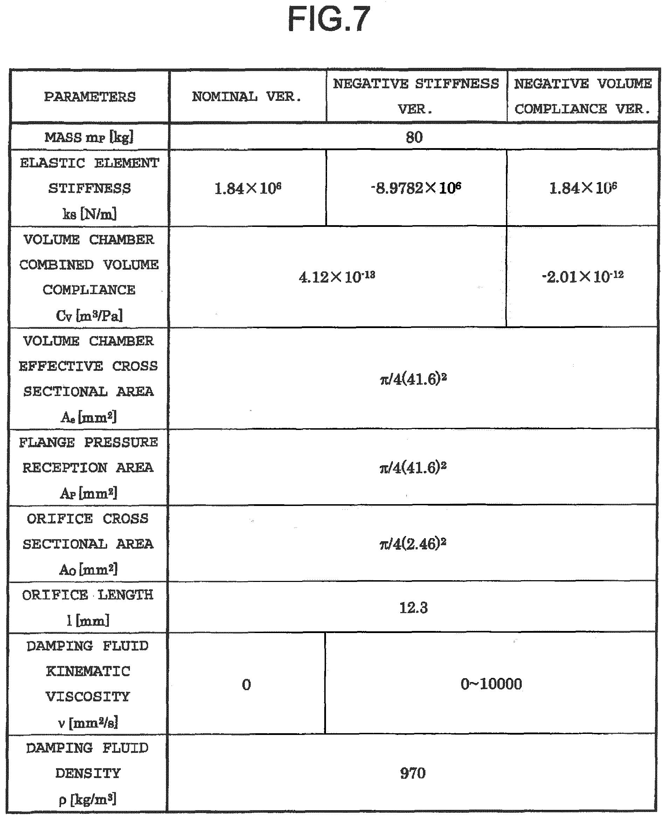

That is, the relative order of the numerator and the denominator is the fourth order with respect to s. Therefore, such an unprecedented vibration isolation characteristic in which the gradient at a high frequency is -80 dB/dec is achieved. In order to confirm this effect, description is made of vibration isolation characteristics before and after the application of the first embodiment of the present invention through use of an example of numerical values in a table shown in FIG. 7. FIG. 7 is a table for showing an example of numerical values of a related-art vibration isolation device and the vibration isolation device according to the present invention.

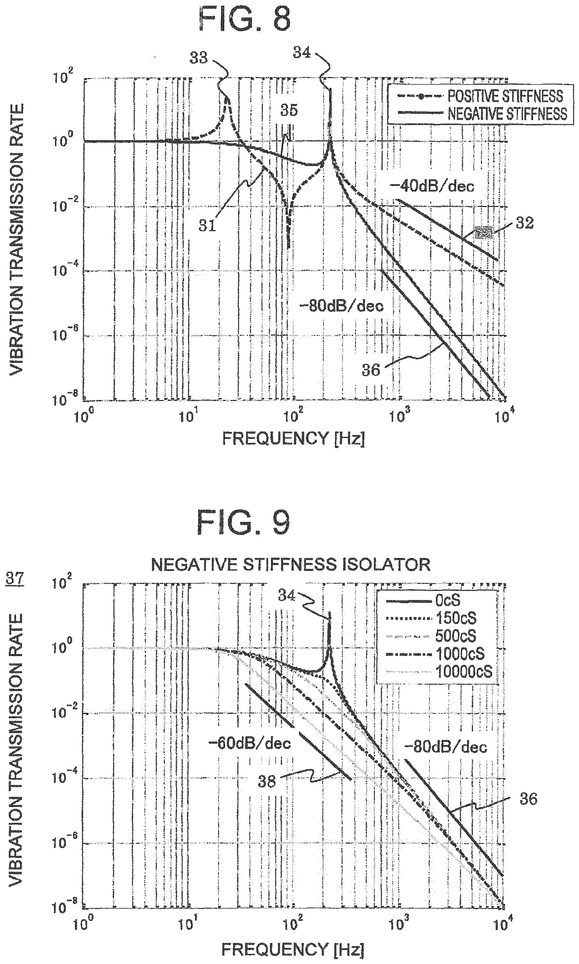

When the parameters listed in a column "NOMINAL VER." of the table of FIG. 7 are applied to Expression (1-11), the vibration isolation characteristic presents a characteristic of a broken line 31 of FIG. 8. FIG. 8 is a graph for showing a vibration transmission characteristic exhibited when no damping is assumed in the vibration isolation device according to the first embodiment of the present invention. In FIG. 8, it is understood from the broken line 31 that a high-frequency roll-off 32 has a gradient at -40 dB/dec, and further, two resonances of a mechanical-system resonance 33 and a fluid-system resonance 34 appear.

Meanwhile, when numerical values in a column "NEGATIVE STIFFNESS VER." of the table shown in FIG. 7 are employed, the vibration isolation characteristic presents a characteristic indicated as a solid line 35 of FIG. 8. In FIG. 8, it is understood from the solid line 35 that the mechanical-system resonance 33 disappears, and a high-frequency roll-off 36 becomes -80 dB/dec. In this way, the single vibration isolation device can provide an excellent vibration isolation characteristic of -80 dB/dec by adjusting ks to the negative stiffness given by Expression (1-12).

In the graph of FIG. 8, the broken line 31 and the solid line 35 obtained when the kinematic viscosity of the damping fluid 23 is 0 are shown. Therefore, high rises are shown in the response curves at the resonances 33 and 34, but in practice, a resonance magnification of the fluid system is suppressed to a certain value or less by an orifice tube flow resistance caused by the viscosity of the fluid.

In order to confirm this point, a vibration transmission characteristic 37 of "NEGATIVE STIFFNESS VER." is shown in FIG. 9 while the kinematic viscosity of the damping fluid 23 is set as a parameter. FIG. 9 is a graph for showing the vibration transmission characteristic exhibited when damping is considered in the vibration isolation device according to the first embodiment of the present invention.

In FIG. 9, it is confirmed that a state in which the fluid-system resonance 34 is gradually suppressed as the kinematic viscosity of the damping fluid 23 increases is observed, and the resonance 34 completely disappears at a kinematic viscosity equal to or more than a certain value. Moreover, it is understood that when the kinematic viscosity excessively increases, although a band 38 presenting -60 dB/dec expands, the high-frequency roll-off 36 of -80 dB/dec finally appears at a high frequency.

From the above-mentioned examination, in the first embodiment of the present invention, the high-frequency roll-off of -80 dB/dec can be achieved without an additional mechanism or addition of an active element, thereby achieving a highly stiff and high-cutoff vibration isolation device.

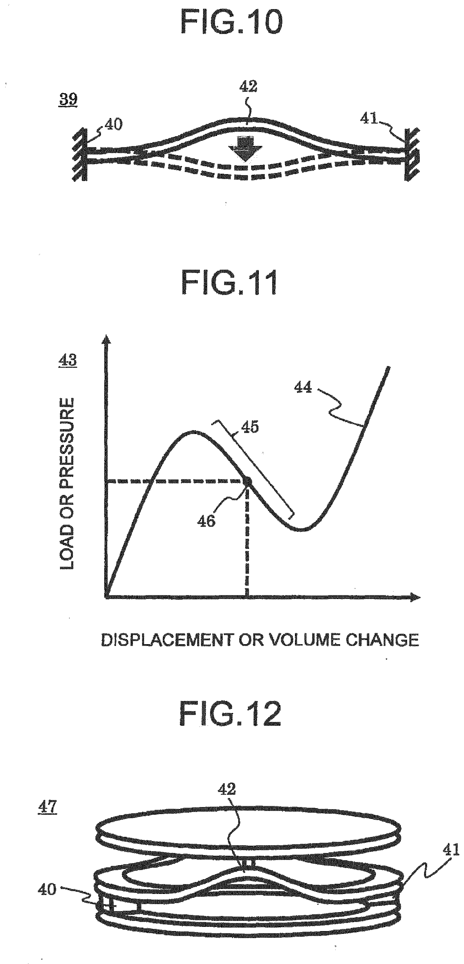

As a specific example of the elastic element 2 having a negative stiffness, such a plate spring 39 as illustrated in FIG. 10 is conceived. FIG. 10 is a conceptual diagram for exemplifying the spring for achieving a negative stiffness in the vibration isolation device according to the first embodiment of the present invention.

In FIG. 10, the plate spring 39 is fixed so as not to be displaced at fixing portions 40 and 41 at both ends, and a center portion 42 is formed so as to protrude. In FIG. 11, there is shown a spring diagram 43, namely, history between a load and a displacement obtained when a load in the top/down direction of the drawing sheet is applied to the center portion 42 of such a plate spring 39.

FIG. 11 is a graph for showing a load-displacement curve of a negative-stiffness spring or a pressure-volume change curve in a negative-volume compliance volume chamber in the vibration isolation device according to the first embodiment of the present invention. In FIG. 11, the plate spring 39 presents a non-linear characteristic 44, and has a certain displacement region in which the displacement and the load are inversely correlated with each other, that is, a region 45 in which a negative stiffness is achieved.

This is a typical characteristic of a negative-stiffness spring known as snap-through. In practice, for example, the shape of the plate spring 39 is designed so that, for example, a point 46 at which the negative stiffness has a linear characteristic becomes an operation point.

In addition, when the cylindrical elastic element 2 is required to be formed as in the cylindrical vibration isolation device 10 exemplified in FIG. 1, as illustrated as a cylindrical elastic element 47 of FIG. 12, the same negative stiffness can be achieved by internally forming a structure corresponding to the center portion 42 having the protruded shape and the fixed portions 40 and 41 as illustrated in FIG. 10. FIG. 12 is a conceptual diagram for exemplifying the cylindrical spring presenting a negative stiffness in the vibration isolation device according to the first embodiment of the present invention.

It is to be noted that the first embodiment of the present invention discloses the vibration isolation device in which the elastic element 2 has the negative stiffness given by Expression (1-12) out of the vibration isolation devices represented by the dynamic model of FIG. 6 as the simplest form, and does not limit the elastic member 2 to the specific configuration of the negative-stiffness spring described above.

In this way, the vibration isolation device according to the first embodiment of the present invention is the vibration isolation device 10 represented by the mathematical model of Expression (1-11) in which the stiffness ks of the elastic element 2 is adjusted to the specific negative value given by Expression (1-12).

That is, the relative order of the numerator and the denominator can be adjusted to the fourth order by adjusting the stiffness of the elastic element 2 to the specific negative value. There is thus provided such an unprecedented remarkable effect that the high-frequency roll-off can be improved to -80 dB/dec without an additional structure or addition of an actuator.

As described above, in the first embodiment, for the combined volume compliance $C_V$ of the first volume chamber and the second volume chamber, the effective cross sectional area $A_e$ of the first volume chamber and the second volume chamber, the pressure receiving area $A_P$ of the first end flange and the second end flange, the effective fluid inertia L of the damping medium in the orifice, and the stiffness $k_S$ of the elastic element, one of the combined volume compliance $C_V$ and the stiffness $k_S$ has a negative value, the other thereof has a positive value, and the combined volume compliance $C_V$ and the stiffness $k_S$ satisfy the predetermined relationship.

Moreover, the axial stiffness of the elastic element is set to a negative value so as to cancel the axial stiffness of the volume chambers generated by the combined volume compliance $C_V$ of the first volume chamber and the second volume chamber.

Therefore, the roll-off of -80 dB/dec in a best case can be achieved with the single passive element while an increase in size and complexity of the device due to added components is avoided.

Second Embodiment

In the second embodiment of the present invention, out of vibration isolation devices expressed by the vibration transmission characteristic of Expression (1-11), a vibration isolation device adjusted so as to set the following expression is disclosed.

$$\frac{A_P A_e}{C_V} = -k_S < 0 \qquad\qquad ...(2\text{-}1).$$

In this case, $A_P$, $A_e$, and $k_S$ usually take positive values. Therefore, in the second embodiment of the present invention, Expression (2-1) means that $C_V$ is selected so as to present a negative volume compliance. Moreover, $C_V$ in the left side of Expression (2-1) means a sum of the axial stiffness based on the volume compliance $C_{V1}$ of the first volume chamber 17 and the axial stiffness based on the volume compliance $C_{V2}$ of the second volume chamber 18.

Therefore, Expression (2-1) means that the axial stiffness of the volume chamber based on the volume compliance $C_V$ is adjusted to have a negative value to cancel the stiffness of the elastic element 2.

When $C_V$ is adjusted to take a negative value so as to satisfy Expression (2-1), the vibration transmission characteristic of the vibration isolation device can be rewritten as follows.

$$T(s) = \frac{k_S}{m_P C_V L s^4 + m_P C_V R s^3 + m_P s^2 + k_S} \qquad\qquad ...(2\text{-}2).$$

That is, the relative order of the numerator and the denominator is the fourth order with respect to s. Therefore, such an unprecedented vibration isolation characteristic in which the gradient at a high frequency is -80 dB/dec is achieved. In order to confirm this effect, description is made of vibration isolation characteristics before and after the application of the second embodiment of the present invention through use of the above-mentioned example of the numerical values in the table shown in FIG. 7.

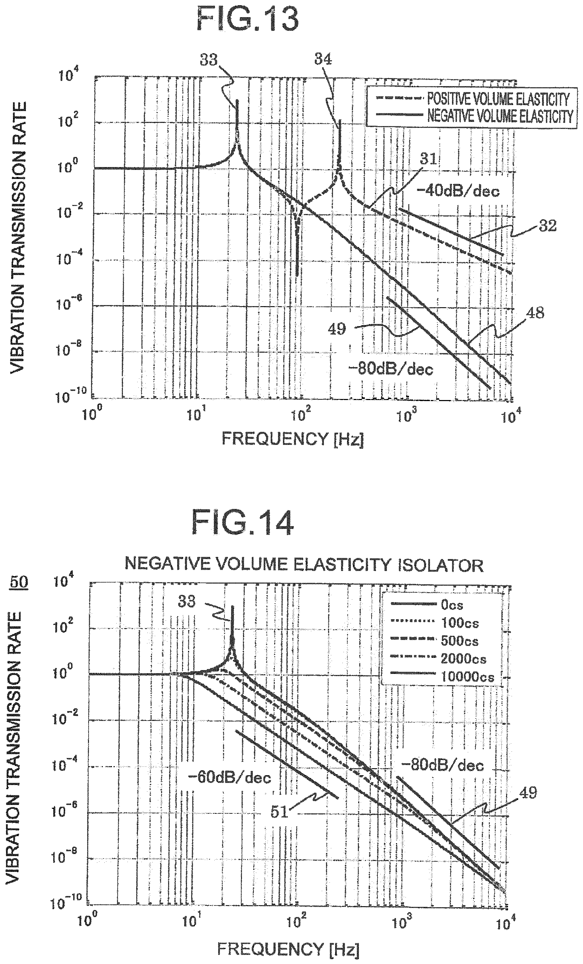

When the parameters listed in the column "NOMINAL VER." of the table of FIG. 7 are applied to Expression (1-11), the vibration isolation characteristic presents a characteristic of a broken line 31 of FIG. 13. FIG. 13 is a graph for showing a vibration transmission characteristic exhibited when no damping is assumed in the vibration isolation device according to the second embodiment of the present invention. In FIG. 13, it is understood from the broken line 31 that a high-frequency roll-off 32 has a gradient at -40 dB/dec, and further, two resonances of a mechanical-system resonance 33 and a fluid-system resonance 34 appear.

Meanwhile, when numerical values in a column "NEGATIVE VOLUME COMPLIANCE VER." of the table shown in FIG. 7 are employed, the vibration isolation characteristic presents a characteristic indicated as a solid line 48 of FIG. 13. In FIG. 13, it is understood from the solid line 48 that the fluid-system resonance 34 disappears, and a high-frequency roll-off 49 becomes -80 dB/dec. In this way, the single vibration isolation device can provide an excellent vibration isolation characteristic of -80 dB/dec by adjusting $C_V$ to the negative volume compliance given by Expression (2-1).

In the graph of FIG. 13, the broken line 31 and the solid line 48 obtained when the kinematic viscosity of the damping fluid 23 is 0 are shown. Therefore, high rises are shown in the response curves at the resonances 33 and 34, but in practice, a resonance magnification of the fluid system is suppressed to a certain value or less by an orifice tube flow resistance caused by the viscosity of the fluid.

In order to confirm this point, a vibration transmission characteristic 50 of "NEGATIVE VOLUME COMPLIANCE VER." is shown in FIG. 14 while the kinematic viscosity of the damping fluid 23 is set as a parameter. FIG. 14 is a graph for showing the vibration transmission characteristic exhibited when damping is considered in the vibration isolation device according to the second embodiment of the present invention.

In FIG. 14, it is understood that a state in which the mechanical-system resonance 33 is gradually suppressed as the kinematic viscosity of the damping fluid 23 increases is observed, and the resonance 33 completely disappears at a kinematic viscosity equal to or more than a certain value. Moreover, it is understood that when the kinematic viscosity excessively increases, although a band 51 presenting -60 dB/dec expands, the high-frequency roll-off 49 of -80 dB/dec finally appears at a high frequency.

From the above-mentioned examination, in the second embodiment of the present invention, the high-frequency roll-off of -80 dB/dec can be achieved without an additional mechanism or addition of an active element, thereby achieving a highly stiff and high-cutoff vibration isolation device.

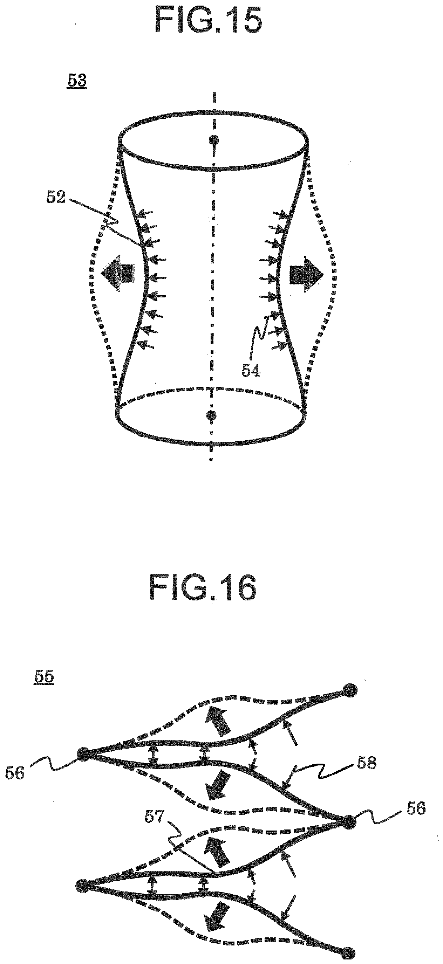

On this occasion, as a specific example of the volume chamber having a negative volume compliance, a volume chamber 53 having a constriction 52 illustrated in FIG. 15 is conceived. FIG. 15 is a conceptual diagram for exemplifying a volume chamber for achieving a negative volume compliance in the vibration isolation device according to the second embodiment of the present invention.

In FIG. 15, in this volume chamber 53, when an internal/external pressure difference 54 is applied, the internal/external pressure difference 54 and the volume change in the volume chamber 53 present the non-linear characteristic 44 shown in FIG. 11, and a certain displacement region in which the volume change and the internal/external difference are inversely associated with each other, that is, the region 45 in which the volume compliance is negative appears. In practice, the shape of the volume chamber 53 is designed so that, for example, the point 46 at which the negative stiffness has a linear characteristic becomes an operation point.

Moreover, as another example, when a volume chamber having a form of a bellows is assumed, the volume chamber is only required to take a shape having a bellow's cross section 55 illustrated in FIG. 16. FIG. 16 is a conceptual diagram for illustrating the cross section of the bellows volume chamber for achieving a negative volume compliance in the vibration isolation device according to the second embodiment of the present invention.

That is, a bellows core portion 57 sandwiched between the respective beads 56, which are welded portions, is only required to have a protrusion at a center. As a result, as in FIG. 10, a volume chamber having a negative volume compliance for generating snap-through in accordance with the internal/external pressure difference 58 can be obtained.

It is to be noted that the second embodiment of the present invention discloses the vibration isolation device in which the volume chamber has the negative volume compliance given by Expression (2-1) out of the vibration isolation devices represented by the dynamic model of FIG. 6 as the simplest form, and does not limit the volume chamber to the specific configuration of the volume chamber having the negative volume compliance described above.

In this way, the vibration isolation device according to the second embodiment of the present invention is the vibration isolation device 10 represented by the mathematical model of Expression (1-11) in which the negative volume compliance $C_V$ is adjusted to the specific negative value given by Expression (2-1). That is, the relative order of the numerator and the denominator can be adjusted to the fourth order by adjusting the volume compliance of the volume chambers to the specific negative value. There is thus provided such an unprecedented remarkable effect that the high-frequency roll-off can be improved to -80 dB/dec without an additional structure or addition of an actuator.

As described above, in the second embodiment, for the combined volume compliance $C_V$ of the first volume chamber and the second volume chamber, the effective cross sectional area $A_e$ of the first volume chamber and the second volume chamber, the pressure receiving area $A_P$ of the first end flange and the second end flange, the effective fluid inertia L of the damping medium in the orifice, and the stiffness $k_S$ of the elastic element, one of the combined volume compliance $C_V$ and the stiffness ks has a negative value, the other thereof has a positive value, and the combined volume compliance $C_V$ and the stiffness ks satisfy the predetermined relationship.

Moreover, the axial stiffness of the volume chambers based on the combined volume compliance $C_V$ of the first volume chamber and the second volume chamber is set to the negative value so as to cancel the axial stiffness of the elastic element.

Therefore, the roll-off of -80 dB/dec in a best case can be achieved with the single passive element while an increase in size and complexity of the device due to added components is avoided.

Third Embodiment

In the first embodiment, even when an error occurs in the negative elastic constant, namely, the stiffness ks of the elastic element 2, and the equality of Expression (1-12) is not satisfied in a strict sense, an excellent vibration isolation characteristic that is -60 dB/dec even in a worst case and -80 dB/dec in a best case can be achieved as long as the error falls within a certain range. Theoretical description is now made of this point.

When no damping is assumed in Expression (1-11), the vibration transmission characteristic is given as follows.

$$T(s) = \frac{L(k_S C_V + A_P A_e)s^2 + k_S}{m_P C_V L s^4 + (C_V L k_S + m_P + A_P A_e L)s^2 + k_S} \qquad ...(3\text{-}1)$$

When only the numerator is focused on, the numerator is given as follows.

$$Num = L(k_S C_V + A_P A_e)s^2 + k_S \qquad ...(3\text{-}2)$$

It is thus understood that a frequency characteristic that takes the constant value ks at a low frequency and gradually approaches +40 dB/dec at a high frequency is provided.

In this case, a significant antiresonance may appear in Expression (3-1) depending on whether $k_S$ and an expression in parenthesis of the numerator are negative or positive, resulting in a large change in the form of the vibration isolation characteristic. Therefore, a permissible error range of the negative elastic constant is clarified in two cases divided depending on whether or not the antiresonance exists.

(1) Case of $k_S < 0$ and $ksC_V + A_PA_e > 0$

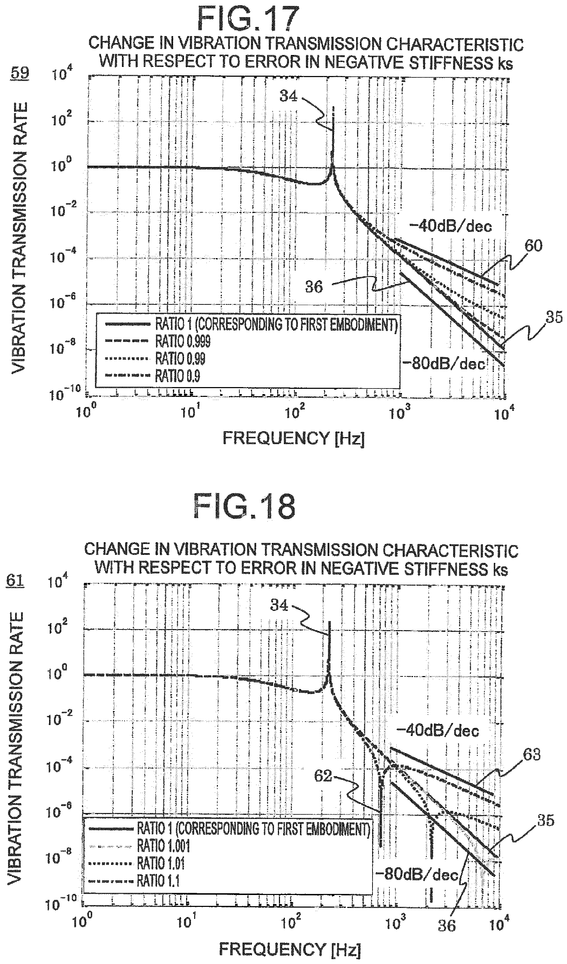

In this case, Expression (3-2) does not have a zero point, and the antiresonance does not appear. The vibration isolation characteristic on this occasion is illustrated as a frequency characteristic 59 of FIG. 17. FIG. 17 is a graph for showing the vibration transmission characteristic exhibited when the expression in parentheses of Expression (3-2) is positive in the vibration isolation device according to a third embodiment of the present invention.

A legend of FIG. 17 indicates ratios with respect to the negative stiffness ks disclosed in the first embodiment. In FIG. 17, there are shown respective vibration transmission characteristics exhibited in cases in which errors of 0.1 %, 1 %, and 10 % occur toward a direction of a decrease in the absolute value $k_S$.

In FIG. 17, a state in which the characteristic matches the ideal characteristic 35 in the first embodiment up to a certain band, but a high-frequency roll-off 60 gradually approaches -40 dB/dec as the error increases is observed. In this state, it is to be noted that the high-frequency roll-off is +20 dB/dec, that is, corresponds to the first order of s at a frequency $\omega_{eq}$ at which a first term and a second term of Expression (3-2) are equal to each other.

That is, in the following condition, the numerator satisfies +20 dB/dec, that is, corresponds to the first multiple of s.

$$-L(k_S C_V + A_P A_e)\omega_{eq}^2 = k_S \qquad \qquad ...(3\text{-}3).$$

In a subsequent band, the numerator satisfies +40 dB/dec, that is, accelerates to the square of s.

Thus, it is understood that a band in which the vibration transmission characteristic of Expression (3-1) satisfies -60 dB/dec even in a worst case is limited to the following band in which the relative order of the numerator and the denominator with respect to s is the third order.

$$0 < \omega < \omega_{eq} \qquad \qquad ...(3\text{-}4)$$

Conversely, when the roll-off of -60 dB/dec is required in a band of from 0 to $\omega_r$, a condition for satisfying this isolation performance is given as follows.

$$-L(k_S C_V + A_P A_e)\omega_r^2 < k_S \qquad \qquad ...(3\text{-}5)$$

That is, when the negative elastic constant, namely, the stiffness $k_S$ of the elastic element 2, is designed in the following range, the vibration isolation performance of -60 dB/dec even in a worst case and -80 dB/dec in a best case is achieved in the band up to $\omega_r$.

$$0 < k_S C_V + A_P A_e < -\frac{k_S}{L\omega_r^2} \qquad \qquad ...(3\text{-}6)$$

(2) Case of $k_S < 0$ and $ksC_V + A_P A_e < 0$

In this case, Expression (3-2) has a zero point, and the antiresonance appears. The vibration isolation characteristic on this occasion is illustrated as a frequency characteristic 61 of FIG. 18. FIG. 18 is a graph for showing the vibration transmission characteristic exhibited when the expression in parentheses of Expression (3-2) is negative in the vibration isolation device according to the third embodiment of the present invention.

A legend of FIG. 18 indicates ratios with respect to the negative stiffness $k_S$ disclosed in the first embodiment. In FIG. 18, there are shown respective vibration transmission characteristics exhibited in cases in which errors of 0.1 %, 1 %, and 10 % occur toward a direction of an increase in the absolute value $k_S$.

In FIG. 18, a state in which the characteristic matches the ideal characteristic 35 in the first embodiment up to a certain band, but an antiresonance 62 appears at an intermediate frequency, and a high-frequency roll-off 63 gradually approaches -40 dB/dec as the error increases is observed.

A point to be focused on in this state is that performance at least equal to or more than the ideal characteristic 35 in the first embodiment is secured up to the antiresonance 62. Thus, in this case, it is found that the vibration isolation performance satisfies -60 dB/dec even in a worst case in the band up to the antiresonance 62.

$$-L(k_S C_V + A_P A_e)\omega_{zero}^2 + k_S = 0 \qquad \qquad ...(3\text{-}7)$$

Moreover, from above, the antiresonance, namely a zero point $\omega_{zero}$, is given as follows.

$$\omega_{zero}^2 = \frac{k_S}{L(k_S C_V + A_P A_e)} \qquad ...(3\text{-}8)$$

That is, the vibration isolation device maintains 60 dB/dec or more in the following range.

$$0 < \omega < \omega_{zero} \qquad ...(3\text{-}9)$$

Conversely, when -60 dB/dec is required in the band of from 0 to $\omega_r$, it is only required to design the negative elastic constant, namely, the stiffness $k_S$ of the elastic element 2 so that the zero point is set to be higher than this frequency.

$$\omega_r^2 < \omega_{zero}^2 = \frac{k_S}{L(k_S C_V + A_P A_e)} \qquad ...(3\text{-}10)$$

That is, the following range is a range of the negative elastic constant, namely, the stiffness ks of the elastic element 2, in which the effect of the third embodiment is guaranteed.

$$\frac{k_S}{L\omega_r^2} < k_S C_V + A_P A_e < 0 \qquad (3\text{-}11)$$

From the above-mentioned examination of the cases (1) and (2), when the expression in parentheses falls within the following range,

$$\frac{k_S}{L\omega_r^2} < k_S C_V + A_P A_e < -\frac{k_S}{L\omega_r^2} \qquad ...(3\text{-}12)$$

that is,

$$\left| k_S C_V + A_P A_e \right| \leq \left| \frac{k_S}{L\omega_r^2} \right| \qquad ...(3\text{-}13)$$

the vibration isolation characteristic of -60 dB/dec even in a worst case and - 80 dB/dec in a best case can be achieved in the band up to $\omega_r$. Therefore, an excellent vibration isolation device can be provided without a new mechanism or addition of an active element.

In this way, the vibration isolation device according to the third embodiment of the present invention is the vibration isolation device 10 represented by the mathematical model of Expression (1-11) in which the stiffness ks of the elastic element 2 is adjusted to a negative value in the specific range given by Expression (3-13). That is, there is provided such an unprecedented remarkable effect that the vibration isolation characteristic in the specific frequency range can be improved to -60 dB/dec even in a worst case and - 80 dB/dec in a best case by adjusting the stiffness of the elastic element 2 to a negative value in the specific range without a new mechanism or addition of an active element.

As described above, in the third embodiment, for the combined volume compliance $C_V$ of the first volume chamber and the second volume chamber, the effective cross sectional area $A_e$ of the first volume chamber and the second volume chamber, the pressure receiving area $A_P$ of the first end flange and the second end flange, the effective fluid inertia L of the damping medium in the orifice, the stiffness $k_S$ of the elastic element, and the upper-limit frequency $\omega_r$ of application of vibration isolation, one of the combined volume compliance $C_V$ and the stiffness $k_S$ has a negative value, the other thereof has a positive value, and the combined volume compliance $C_V$ and the stiffness $k_S$ satisfy the predetermined relationship.

Therefore, the roll-off of -80 dB/dec in a best case can be achieved with the single passive element while an increase in size and complexity of the device due to added components is avoided.

Fourth Embodiment

In the second embodiment, even when an error occurs in the negative volume compliance $C_V$, and the equality of Expression (2-1) is not satisfied in a strict sense, an excellent vibration isolation characteristic that is -60 dB/dec even in a worst case and -80 dB/dec in a best case can be achieved as long as the error falls within a certain range. Theoretical description is now made of this point.

As in the third embodiment, a significant antiresonance may appear in Expression (3-1) depending on whether the expression in parenthesis of the numerator is negative or positive in Expression (3-1) and Expression (3-2), resulting in a large change in the form of the vibration isolation characteristic. Therefore, a permissible error range of the negative volume compliance $C_V$ is also clarified in two cases divided depending on whether or not the antiresonance exists.

(1) Case of $k_S > 0$ and $ksC_V + A_PA_e > 0$

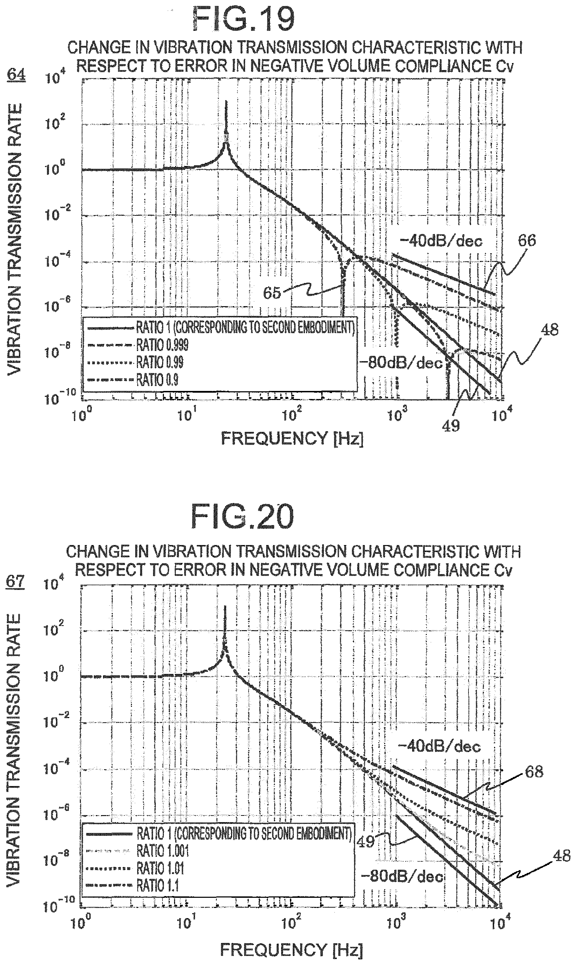

In this case, Expression (3-2) has a zero point, and the antiresonance appears. The vibration isolation characteristic on this occasion is illustrated as a frequency characteristic 64 of FIG. 19. FIG. 19 is a graph for showing the vibration transmission characteristic exhibited when the expression in parentheses of Expression (3-2) is positive in the vibration isolation device according to a fourth embodiment of the present invention.

A legend of FIG. 19 indicates ratios with respect to the negative volume compliance $C_V$ disclosed in the second embodiment. In FIG. 19, there are shown respective vibration transmission characteristics exhibited in cases in which errors of 0.1 %, 1 %, and 10 % occur toward a direction of a decrease in the absolute value $C_V$.

In FIG. 19, a state in which the characteristic matches the ideal characteristic 48 in the second embodiment up to a certain band, but an antiresonance 65 appears at an intermediate frequency, and a high-frequency roll-off 66 gradually approaches -40 dB/dec as the error increases is observed.

A point to be focused on in this state is that performance at least equal to or more than the ideal characteristic 48 in the second embodiment is secured up to the antiresonance 65. Thus, in this case, it is found that the vibration isolation performance satisfies -60 dB/dec even in a worst case in the band up to the antiresonance 65.

$$-L(k_S C_V + A_P A_e)\omega_{zero}^2 + k_S = 0 \qquad \ldots(4\text{-}1)$$

Moreover, from above, the antiresonance, namely, a zero point $\omega_{zero}$, is given as follows.

$$\omega_{zero}^2 = \frac{k_S}{L(k_S C_V + A_P A_e)} \qquad \ldots (4\text{-}2)$$

That is, the vibration isolation device maintains 60 dB/dec or more in the following range.

$$0 < \omega < \omega_{zero} \qquad \ldots(4\text{-}3)$$

Conversely, when -60 dB/dec is required in the band of from 0 to $\omega_r$, it is only required to design the negative volume compliance $C_V$ so that the zero point is set to be higher than this frequency.

$$\omega_r^2 < \omega_{zero}^2 = \frac{k_S}{L(k_S C_V + A_P A_e)} \qquad \ldots(4\text{-}4)$$

That is, the following range is a range of the negative volume compliance $C_V$, in which the effect of the fourth embodiment is guaranteed.

$$0 < k_S C_V + A_P A_e < \frac{k_S}{L\omega_r^2} \qquad \ldots(4\text{-}5)$$

(2) Case of $k_S > 0$ and $k_S C_V + A_P A_e < 0$

In this case, Expression (3-2) does not have a zero point, and the antiresonance does not appear. The vibration isolation characteristic on this occasion is illustrated as a frequency characteristic 67 of FIG. 20. FIG. 20 is a graph for showing the vibration transmission characteristic exhibited when the expression in parentheses of Expression (3-2) is negative in the vibration isolation device according to the fourth embodiment of the present invention.

A legend of FIG. 20 indicates ratios with respect to the negative volume compliance $C_V$ disclosed in the second embodiment. In FIG. 20, there are shown respective vibration transmission characteristics exhibited in cases in which errors of 0.1 %, 1 %, and 10 % occur toward a direction of an increase in the absolute value ks.

In FIG. 20, a state in which the characteristic matches the ideal characteristic 48 in the second embodiment up to a certain band, but a high-frequency roll-off 68 gradually approaches -40 dB/dec as the error increases is observed. In this state, it is to be noted that the high-frequency roll-off is +20 dB/dec, that is, corresponds to the first multiple of s at a frequency $\omega_{eq}$ at which the first term and the second term of Expression (3-2) are equal to each other.

That is, in the following condition, the numerator satisfies +20 dB/dec, that is, corresponds to the first multiple of s.

$$-L(k_S C_V + A_P A_e)\omega_{eq}^2 = k_S \qquad ...(4\text{-}6)$$

In a subsequent band, the numerator satisfies +40 dB/dec, that is, accelerates to the square of s.

Thus, it is understood that a band in which the vibration transmission characteristic of Expression (3-1) satisfies -60 dB/dec even in a worst case is limited to the following band in which the relative order of the numerator and the denominator with respect to s is the third order.

$$0 < \omega < \omega_{eq} \qquad ...(4\text{-}7)$$

Conversely, when the roll-off of -60 dB/dec is required in the band of from 0 to $\omega_r$, a condition for satisfying this isolation performance is given as follows.

$$-L(k_S C_V + A_P A_e)\omega_r^2 < k_S \qquad ...(4\text{-}8)$$

That is, when the negative volume compliance $C_V$ is designed in the following range, the vibration isolation performance of -60 dB/dec even in a worst case and -80 dB/dec in a best case is achieved in the band up to $\omega_r$.

$$-\frac{k_S}{L\omega_r^2} < k_S C_V + A_P A_e < 0 \qquad ...(4\text{-}9)$$

From the above-mentioned examination of the cases (1) and (2), when the expression in parentheses falls within the following range,

$$-\frac{k_S}{L\omega_r^2} < k_S C_V + A_P A_e < \frac{k_S}{L\omega_r^2} \qquad ...(4\text{-}10)$$

that is,

$$\left| k_S C_V + A_P A_e \right| \leq \left| \frac{k_S}{L\omega_r^2} \right| \qquad ...(4\text{-}11)$$

the vibration isolation characteristic of -60 dB/dec even in a worst case and - 80 dB/dec in a best case can be achieved in the band up to $\omega_r$. Therefore, an excellent vibration isolation device can be provided without a new mechanism or addition of an active element.

In this way, the vibration isolation device according to the fourth embodiment of the present invention is the vibration isolation device 10 represented by the mathematical model of Expression (1-11) in which the negative volume

compliance $C_v$ is adjusted to a negative value in the specific range given by Expression (4-11).

That is, there is provided such an unprecedented remarkable effect that the vibration isolation characteristic in the specific frequency range can be improved to -60 dB/dec even in a worst case and -80 dB/dec in a best case by adjusting the negative volume compliance $C_v$ to a negative value in the specific range without a new mechanism or addition of an active element.

As described above, in the fourth embodiment, for the combined volume compliance $C_V$ of the first volume chamber and the second volume chamber, the effective cross sectional area $A_e$ of the first volume chamber and the second volume chamber, the pressure receiving area $A_P$ of the first end flange and the second end flange, the effective fluid inertia L of the damping medium in the orifice, the stiffness $k_S$ of the elastic element, and the upper-limit frequency $\omega_r$ of application of vibration isolation, one of the combined volume compliance $C_V$ and the stiffness ks has a negative value, the other thereof has a positive value, and the combined volume compliance $C_V$ and the stiffness $k_S$ satisfy the predetermined relationship.

Therefore, the roll-off of -80 dB/dec in a best case can be achieved with the single passive element while an increase in size and complexity of the device due to added components is avoided.

List of Reference Signs

| | |
|---|---|
| 2 | elastic element |
| 4 | precision device |
| 5 | base surface |
| 10 | vibration isolation device |
| 11 | outer peripheral cylindrical tube |
| 12 | internal cylinder |
| 13 | plate spring |
| 14 | layered structure |
| 15 | coupling pole |
| 16 | fluid damper |
| 17 | first volume chamber |
| 18 | second volume chamber |
| 19 | orifice |
| 20 | intermediate flange |
| 21 | top end flange |
| 22 | bottom end flange |
| 23 | damping fluid |

**Claims**

**1.** A vibration isolation device, comprising an elastic element and a damping element, which are coupled to each other in parallel,
wherein the damping element includes:

- a first volume chamber and a second volume chamber each having a volume compliance;
- a first end flange connected to an end of the first volume chamber;
- a second end flange connected to an end of the second volume chamber;
- an intermediate flange, in which an orifice configured to couple the first volume chamber and the second volume chamber to each other is formed;
- a damping medium sealed in a closed space formed of the first volume chamber, the second volume chamber, the intermediate flange, the first end flange, and the second end flange; and
- a coupling pole configured to stiffly couple the first end flange and the second end flange to each other, and

wherein, for:

a combined volume compliance $C_V$ of the first volume chamber and the second volume chamber;
an effective cross sectional area $A_e$ of the first volume chamber and the second volume chamber;
a pressure receiving area $A_P$ of the first end flange and the second end flange;

an effective fluid inertia L of the damping medium in the orifice;
an axial stiffness $k_S$ of the elastic element; and
an upper-limit frequency $\omega_r$ of application of vibration isolation,
one of the combined volume compliance $C_V$ and the axial stiffness $k_S$ has a negative value, the other thereof has a positive value, and the combined volume compliance $C_V$ and the axial stiffness ks satisfy a relationship given by Expression (1).

$$\left| k_S C_V + A_P A_e \right| \leq \left| \frac{k_S}{L \omega_r^2} \right| \qquad \cdots (1).$$

2. The vibration isolation device according to claim 1,
wherein the axial stiffness of the elastic element is set to a negative value so as to cancel an axial stiffness of the first volume chamber and the second volume chamber, which is based on the combined volume compliance $C_V$ of the first volume chamber and the second volume chamber.

3. The vibration isolation device according to claim 1,
wherein the axial stiffness of the first volume chamber and the second volume chamber, which is based on the combined volume compliance $C_V$ of the first volume chamber and the second volume chamber, is set to a negative value so as to cancel the axial stiffness of the elastic element.

# FIG. 1

# FIG. 2

# FIG. 3

# FIG. 4

# FIG. 5

24

# FIG. 6

# FIG.7

| PARAMETERS | NOMINAL VER. | NEGATIVE STIFFNESS VER. | NEGATIVE VOLUME COMPLIANCE VER. |
|---|---|---|---|
| MASS $m_P$ [kg] | 80 | | |
| ELASTIC ELEMENT STIFFNESS $k_s$ [N/m] | $1.84 \times 10^6$ | $-8.9782 \times 10^6$ | $1.84 \times 10^6$ |
| VOLUME CHAMBER COMBINED VOLUME COMPLIANCE $C_v$ [m³/Pa] | $4.12 \times 10^{-13}$ | | $-2.01 \times 10^{-12}$ |
| VOLUME CHAMBER EFFECTIVE CROSS SECTIONAL AREA $A_e$ [mm²] | $\pi/4(41.6)^2$ | | |
| FLANGE PRESSURE RECEPTION AREA $A_P$ [mm²] | $\pi/4(41.6)^2$ | | |
| ORIFICE CROSS SECTIONAL AREA $A_O$ [mm²] | $\pi/4(2.46)^2$ | | |
| ORIFICE LENGTH $l$ [mm] | 12.3 | | |
| DAMPING FLUID KINEMATIC VISCOSITY $v$ [mm²/s] | 0 | 0~10000 | |
| DAMPING FLUID DENSITY $\rho$ [kg/m³] | 970 | | |

# FIG. 8

# FIG. 9

# FIG.10

# FIG.11

DISPLACEMENT OR VOLUME CHANGE

# FIG.12

## FIG.13

## FIG.14

# FIG.15

# FIG.16

# FIG.17

**CHANGE IN VIBRATION TRANSMISSION CHARACTERISTIC WITH RESPECT TO ERROR IN NEGATIVE STIFFNESS ks**

# FIG.18

**CHANGE IN VIBRATION TRANSMISSION CHARACTERISTIC WITH RESPECT TO ERROR IN NEGATIVE STIFFNESS ks**

# FIG.19

CHANGE IN VIBRATION TRANSMISSION CHARACTERISTIC WITH
RESPECT TO ERROR IN NEGATIVE VOLUME COMPLIANCE Cv

# FIG.20

CHANGE IN VIBRATION TRANSMISSION CHARACTERISTIC WITH
RESPECT TO ERROR IN NEGATIVE VOLUME COMPLIANCE Cv

## INTERNATIONAL SEARCH REPORT

| International application No. |
|---|
| PCT/JP2017/031976 |

### A. CLASSIFICATION OF SUBJECT MATTER
$F16F15/023(2006.01)i$, $F16F3/07(2006.01)i$, $F16F15/04(2006.01)i$

According to International Patent Classification (IPC) or to both national classification and IPC

### B. FIELDS SEARCHED

Minimum documentation searched (classification system followed by classification symbols)
$F16F1/00-3/12$, $F16F9/00-9/58$, $F16F15/00-15/36$

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-57749 A (Mitsubishi Electric Corp.), 22 March 2012 (22.03.2012), paragraphs [0016] to [0035]; fig. 1 (Family: none) | 1–3 |
| A | US 8490952 B1 (VIBROACOUSTICS SOLUTIONS, INC.), 23 July 2013 (23.07.2013), column 14, line 43 to column 15, line 7; fig. 18 to 19 (Family: none) | 1–3 |
| A | CN 104500648 A (Shanghai Jiao Tong University), 08 April 2015 (08.04.2015), paragraphs [0038] to [0042]; fig. 1 to 3 (Family: none) | 1–3 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 November 2017 (07.11.17) | 21 November 2017 (21.11.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2017-67272 A  (Mitsubishi Electric Corp.), 06 April 2017 (06.04.2017), paragraphs [0057] to [0059]; fig. 7 (Family: none) | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007531852 A

- JP 2009174604 A